Europäisches Patentamt

European Patent Office

Office européen des brevets

(19)

(11) Numéro de publication: **0 374 251**

**A1**

# DEMANDE DE BREVET EUROPEEN PUBLI E EN APPLICATION DE L'article 158, paragraphe 3 de la CBE

(12)

(21) Numéro de dépôt: 88908415.8

(22) Date de dépôt: 25.05.88

(86) Numéro de dépôt internationale :
PCT/SU88/00121

(87) Numéro de publication internationale :
WO 89/11324 (30.11.89 89/28)

(51) Int. Cl.5: **B01D 35/06**

(43) Date de publication de la demande:
27.06.90 Bulletin 90/26

(84) Etats contractants désignés:
**DE FR IT SE**

(71) Demandeur: **UKRAINSKY INSTITUT INZHENEROV VODNOGO KHOZYAISTVA**
**ul. Leninskaya, 11**
**Rovno, 266000(SU)**

(72) Inventeur: **GARASCHENKO, Vyacheslav, Ivanovich**
**ul. Novorossiiskaya, 1-42**
**Rovno, 266027(SU)**
Inventeur: **SANDULYAK, Alexandr Vasilievich**
**ul. Leninskaya, 96-2**
**Rovno, 266000(SU)**
Inventeur: **VOLKOV, Igor Vsevolodovich**
**pr. Mira, 12-97**
**Rovno, 266000(SU)**

(74) Mandataire: **Durand, Yves Armand Louis**
**Cabinet Z. Weinstein 20, Avenue de Friedland**
**F-75008 Paris(FR)**

(54) **DISPOSITIF POUR SEPARER DES MATERIAUX FERROMAGNETIQUES CONTENUS DANS DES MILIEUX FLUIDES.**

(57) Le dispositif pour la séparation de matériaux ferromagnétiques du type comprenant une chambre de travail (1), remplie d'un garnissage ferromagnétique (3) en forme de plaques (4) dotées d'orifices (5) bordés de saillies profilées (6), un système d'aimantation (9) et un moyen de compactage des plaques ayant la forme d'une source supplémentaire (11) de champ magnétique, ainsi qu'une tubulure d'alimentation (14) et une tubulure (15) de sortie du fluide. L'agencement des orifices (5) sur la plaque (4), leurs dimensions, leur configuration, les dimensions des saillies (6) et l'écart entre les plaques (4) sont variables suivant le volume de la chambre de travail (1) en fonction des propriétés magnétiques des particules ferromagnétiques d'impureté du fluide à nettoyer, de leur dimension (dispersion) et de la viscosité du fluide.

*FIG. 1*

- 1 -

## "Dispositif pour la séparation de matériaux ferromagnétiques des fluides".

## Domaine de l'invention

La présente invention se rapporte aux dispositifs pour la séparation de matériaux ferromagnétiques des fluides.

## Etat de la technique

On connaît le dispositif pour séparer des matériaux ferromagnétiques des fluides décrit dans SU-A-1029990. Il comprend une chambre de travail cylindrique à l'extérieur de laquelle est placé le système d'aimantation et à l'intérieur, un garnissage ferromagnétique conçu sous la forme de plaques à orifices. La chambre de travail est pourvue de tubulures d'amenée et de sortie du fluide nettoyé.

Dans le dispositif connu, les plaques à orifices sont régulièrement réparties sur la hauteur de la chambre. De plus, entre les plaques sont formés des espaces en fente par lesquels passe le flux de fluide à nettoyer. La précipitation des impuretés du milieu à nettoyer se déroule sur le bord des orifices des plaques où se forment des zones de champ magnétique inhomogène. Cependant, l'action de force du champ magnétique inhomogène sur les particules des impuretés dans ces zones est assez faible. En outre, toutes les zones de champ magnétique inhomogène dans le volume de la chambre ont à peu près une même inhomogénéité de champ magnétique ce qui ne permet pas de nettoyer avec efficacité les fluides contenant des impuretés à divers degré de dispersion, à différentes propriétés magnétiques, dont l'élimination sollicite une inhomogénéité distincte du champ magnétique dans le volume de la chambre de travail.

Ensuite, dans le dispositif connu, les plaques sont liées rigidement les unes aux autres sans possibilité de déplacement réciproque et d'isolement ce qui entrave l'efficacité de la régénération et, respectivement, du lavage de bonne qualité des plaques des impuretés retenues.

On connaît aussi le dispositif pour séparer les matériaux ferromagnétiques des fluides (SU-A-1152618) comprenant une chambre de travail pourvue d'un garnissage ferromagnétique sous forme de nombreuses plaques à orifices débouchants, ayant sur le contour des saillies profilées orientées sous un angle par rapport à la plaque, un système d'aimantation adapté à réagir sur le garnissage ferromagnétique et à l'aimanter, une tubulure d'entrée pour alimenter la chambre de travail en fluide à nettoyer et une tubulure de sortie pour recevoir le fluide nettoyé après son passage par le garnissage.

Dans le dispositif connu, les plaques ayant des orifices de mêmes dimensions, comprennent des saillies profilées formant de nombreuses zones de champ magnétique inhomogène dont la valeur dans ces zones est d'un ordre plus élevée que dans les plaques à orifices sans saillie. Ce dispositif fonctionne avec efficacité lors du nettoyage des fluides contenant des particules d'impureté homogènes en dimensions et en propriétés magnétiques. La modification du type du milieu à nettoyer, contenant des impuretés différentes en dimensions et en propriétés, implique une modification de dimensions et d'agencement du garnissage lamellaire ayant des orifices et des saillies profilées différents. Une influence considérable sur l'efficacité du nettoyage et sur le choix du garnissage est aussi

- 3 -

exercée par la viscosité du milieu à nettoyer. Des plaques à dimensions identiques des orifices, des saillies à agencement semblable conduisent à ce que lors du nettoyage des fluides dans le dispositif, les parties du volume du garnissage en hauteur de la chambre fonctionnent en régime de nettoyage non adéquat. Les parties du bas (près de la tubulure d'entrée) du volume du garnissage "s'encombrent" d'impuretés rapidement, les moyennes, plus lentement et celles du haut (de la tubulure de sortie), encore plus lentement. Alors, le temps entre deux périodes successives des régimes de génération sera défini par le fonctionnement des couches inférieures du garnissage, c'est-à-dire la période de filtration sera réduite.

En même temps, les fluides réels à nettoyer, pour la plupart, contiennent des particules d'impureté dont les dimensions varient dans une large gamme de 0,01 à 10 $\mu$m et plus, tandis que le niveau requis de nettoyage des fluides, par exemple, des eaux de circulation de la métallurgie, des condensats des centrales d'énergie électrique et thermique, doit être porté jusqu'à la teneur résiduelle en impuretés de $10^{-4}$ à $10^{-9}$ p.mas. En outre, les impuretés possèdent des propriétés magnétiques différentes : de paramagnétiques à ferromagnétiques, tandis que les fluides à nettoyer varient des gaz aux condensats et huiles dont la viscosité est différente. Le dispositif connu, en raison de particularités constitutives, ne peut pas assurer le niveau requis de nettoyage des milieux contenant des impuretés de différentes dimensions, de diverses propriétés magnétiques, de créer des conditions efficaces adéquates de nettoyage dans tout le volume du garnissage.

EP 0 374 251 A1

- 4 -

## Exposé de l'invention

Le problème posé à la base de l'invention est d'élaborer un dispositif pour la séparation de matériaux ferromagnétiques des fluides, ayant une telle constitution du garnissage ferromagnétique que celui-ci permettrait d'assurer un nettoyage efficace de fluides de viscosités différentes et contenant des particules ferromagnétiques de dimensions et de propriétés différentes tout en réduisant les consommations énergétiques.

L'invention consiste en un dispositif pour la séparation de matériaux ferromagnétiques des fluides, du type comprenant une chambre de travail pourvue d'un garnissage ferromagnétique sous forme de nombreuses plaques percées de trous débouchants, dotés sur le contour de saillies profilées, orientées sous un angle par rapport à la plaque, un système d'aimantation adapté pour l'interagir avec le garnissage ferromagnétique et pour l'aimanter, une tubulure d'entrée pour alimenter la chambre de travail en fluide à nettoyer et une tubulure de sortie pour recevoir le fluide nettoyé après son passage à travers le garnissage, selon l'invention, l'agencement des orifices sur la plaque, leurs dimensions, leur configuration, les dimensions et la forme des saillies, la distance entre les plaques sont variables dans le volume de la chambre de travail en fonction des propriétés magnétiques des particules d'impureté du fluide à nettoyer, de leurs dimensions (dispersion), de la concentration et de la viscosité du fluide.

Pour assurer la variation de l'écart entre les plaques jusqu'à la valeur requise, il est recommandé de fabriquer les plaques en matériau flexible, de leur donner une forme curviligne identique et de placer entre celles-ci des entre-lames élastiques. Comme entre-lames élastiques, on peut utiliser des éléments simples à fabriquer et assurant, si nécessaire, un degré différent de compression de plusieurs plaques et assurant aussi la présence ou l'absence de contact des saillies profilées et de la surface des plaques adjacentes lors du branchement ou du débranchement du champ magnétique.

Pour régulariser le degré de compression (de rapprochement) des plaques, il est préférable d'avoir au moins une source auxiliaire de champ magnétique située hors de la chambre de travail du dispositif de manière que le vecteur de son champ magnétique, impliquant lors du branchement et du débranchement une réaction magnétique du garnissage lamellaire, soit orienté le long de l'axe de la chambre de travail et permette de compresser, si nécessaire, les plaques jusqu'à un écart minimum possible, ou en relâchant les plaques, c'est-à-dire, en augmentant l''écart entre les plaques jusqu'à une valeur requise.

Pour faciliter la variation de l'écart entre les plaques, surtout pour les desserrer lors de la régénération, il est préférable de les placer dans la chambre en une succession suivante : une concave, l'autre convexe.

Dans le cas où il est nécessaire d'augmenter le nombre de zones du champ magnétique à gradient élevé pour assurer, par exemple, le niveau requis de nettoyage fin de liquides à faible concentration, il est préférable d'exécuter les saillies profilées sous forme de lamelles à pointe aiguë, de faire, au moins sur une partie de celles-ci, des orifices supplémentaires, bordés de lobes auxiliaires à pointe aiguë, rabattus suivant un angle donné contre le plan de la lamelle. De plus, il est préférable d'augmenter le nombre des lamelles principales pourvues d'orifices supplémentaires le long de la chambre de la tubulure d'entrée jusqu'à la tubulaire de sortie. Ceci permet de prolonger la durée de fonctionnement du dispositif en régime de nettoyage jusqu'à "l'encombrement" régulier et total par les impuretés de tout le volume utile, en augmentant alors la longévité de la filtration, la capacité d'absorption et le coût d'utilisation du dispositif dans son ensemble.

On peut relier la plaque précédente du garnissage ferromagnétique par l'extrémité au commencement de chaque plaque suivante de manière que, le long de l'axe de la chambre de travail, se forme une bande de plaques en zigzag.

Dans de nombreux cas, on peut disposer les plaques parallèlement l'une à l'autre et faire décroître l'écart entre deux plaques adjacentes de la tubulure d'entrée jusqu'à la tubulure de sortie.

La hauteur de la saillie profilée doit être égale à l'écart entre deux plaques adjacentes de manière que les bouts des saillies des plaques précédentes se trouvent en contact avec les surfaces des plaques suivantes.

Il est aussi recommandé, pour une précipitation régulière des impuretés de dispersion différente sur toute la hauteur du garnissage, de fabriquer les plaques de façon que la dimension des orifices diminue dans le sens allant de la tubulure d'entrée vers la tubulure de sortie.

En fonction des propriétés magnétiques des particules d'impuretés du fluide à nettoyer, de leurs dimensions et de la viscosité du fluide, dans le but d'assurer un fonctionnement rationnel et économique du dispositif de nettoyage, les saillies profilées peuvent être fabriquées sous forme d'anneaux à section variable, croissante depuis le sommet de la saillie jusqu'à sa base.

Il est utile, pour augmenter le nombre des zones du champ à gradient élevé, de faire des dentures sur la surface de bout de la saillie annulaire.

Il est aussi avantageux d'exécuter les saillies profilées sous forme de rebords autour des orifices, rabattus vers l'extérieur par rapport au centre de l'orifice pour augmenter la surface de déposition des impuretés.

On peut définir la hauteur des saillies profilées inférieure en fonction de l'écart entre deux plaques adjacentes et doter ces plaques, à l'endroit de ces orifices, d'aires concaves et convexes dont la profondeur, par rapport au plan de la plaque, assure en combinaison avec la hauteur de la saillie profilée, le contact de cette dernière avec la surface de la plaque adjacente.

Pour augmenter la densité d'empilement des plaques, la perméabilité magnétique de toute la couche de garnissage et les forces magnétiques de réaction entre le garnissage et les particules d'impuretés du fluide à nettoyer, on peut doter les plaques de saillies profilées supplémentaires sous forme de tiges.

Les tiges, rigidement fixées aux plaques paires, peuvent alors avoir une longueur égale à l'écart entre toutes les deux plaques impaires voisines. Dans d'autres cas, les tiges peuvent avoir une longueur inférieure à l'écart entre toutes les deux plaques impaires voisines.

Il est aussi possible de concevoir les tiges sous forme d'un faisceau de fils ferromagnétiques souples.

Les tiges peuvent aussi avoir une section transversale variable.

En outre, les tiges peuvent avoir la forme de tubes et, alors, la résistance hydraulique du garnissage est réduite.

Dans les cas où le système d'aimantation est un solénoïde, il est préférable de donner aux plaques la forme de disques plats et de définir la quantité de saillies profilées sur chaque plaque de façon que celle-ci aille en augmentant de la périphérie au centre du disque.

Par contre, si le système d'aimantation est un électro-aimant bipolaire dont les pôles sont contigus à la surface de la chambre de travail où le sens du courant du fluide à nettoyer est orienté transversalement au vecteur d'induction du champ magnétique, il est recommandé de répartir les saillies profilées sur la plaque de manière que leur nombre, dans la zone de chaque plaque la plus éloignée des pôles de l'électro-aimant, s'accroîsse.

Il est possible de fabriquer les plaques ayant la forme de surfaces cylindriques coaxiales et concentriques à la chambre de travail, tout en définissant l'écart entre les plaques adjacentes en décroissance de la tubulure d'entrée à la tubulure de sortie.

On peut aussi concevoir les plaques ayant la forme de surfaces cylindriques dont la section transversale représente une spirale, tout en faisant décroître l'écart entre les deux spires adjacentes de la spirale de la tubulure d'entrée à la tubulure de sortie.

Les avantages du dispositif pour la séparation de matériaux ferromagnétiques des fluides, conçu d'après la présente invention, consistent en ce qu'à la suite du choix et de la conception, du garnissage ferromagnétique, de l'agencement des orifices sur la plaque, de leur dimension, de la configuration, des dimensions et de la forme des saillies, de l'écart entre les plaques variables dans le volume de la chambre de travail en fonction des propriétés magnétiques des particules d'impuretés ferromagnétiques du fluide à nettoyer, de leurs dimensions (dispersion), de la concentration et de la viscosité du fluide, on assure, avec une faible consommation d'énergie admissible, un niveau élevé requis de nettoyage d'un fluide aussi bien liquide que gazeux, aussi bien à viscosité importante que faible, à diverses dimensions des particules d'impuretés et à propriétés magnétiques différentes.

Dans le dispositif selon l'invention, on réalise rapidement et avec efficacité la régénération du garnissage ferromagnétique. Grâce aux sources auxiliaires de champ magnétique, la densité d'empilement du garnissage est une technique simple à régulariser à l'aide de sources auxiliaires de champ magnétique, disposées hors de la chambre de travail et garantissant l'interaction magnétique avec le garnissage lamellaire.

La fabrication des plaques souples, à forme curviligne, entre lesquelles sont posés des entre-lames élastiques, réduit les dépenses énergétiques lors de la variation

- 10 -

de la densité d'empilement des plaques causée par leur compactage ou leur décompactage (séparation), ce qui permet d'obtenir une opération de régénération de haute qualité. Il est surtout facile de modifier la densité d'empilement du garnissage dans une large plage, par exemple, de 0,1 à 0,6 dans la version du dispositif où les plaques sont reliées entre elles en formant, le long de l'axe de la chambre de travail, une bande en zigzag formée de plaques.

L'équipement du dispositif, selon l'invention, de saillies profilées supplémentaires sous forme de tiges ferromagnétiques, placées et fixées sur les plaques impaires de l'empilement, permet d'augmenter la densité de l'empaquetage du garnissage, l'induction moyenne du champ dans le garnissage, le nombre de zones du champ magnétique à gradient élevé et le degré de nettoyage du fluide. La forme et les dimensions des tiges sont sélectionnées à partir du type de fluide à nettoyer et le degré de nettoyage souhaité.

Les versions du dispositif où les plaques sont réalisées en forme de surfaces cylindriques coaxiales ou en forme de surfaces cylindriques dont la section transversale représente des spirales, sont particulièrement pratiques lors de leur montage et démontage.

Dans toutes les versions du dispositif selon l'invention, on assure "l'empilement" uniforme en particules d'impureté sur tout le volume du garnissage et une augmentation, à cet effet, du degré de nettoyage et de la durée de fonctionnement du dispositif à régime de nettoyage égal en raison du nombre des saillies, de leur hauteur, de l'écart entre les plaques qui sont variables en hauteur et en diamètre en fonction de la chambre, par exemple, on peut prévoir que l'écart entre les plaques va en décroîssant depuis la tubulure d'entrée jusqu'à la tubulure de sortie.

Description brève des dessins

L'invention va maintenant être éclaircie par la description concrète des versions non limitatives de sa réalisation et par les dessins non limitatifs annexés sur lesquels, d'après l'invention :

La figure 1 représente une vue générale en coupe longitudinale du dispositif pour la séparation de matériaux ferromagnétiques des fluides, avec un garnissage ferromagnétique ayant la forme de nombreuses plaques plates ;

La figure 2 est une vue de la partie A de la figure 1 agrandie, les saillies profilées des plaques en forme de lamelles aiguës principales sont dotées d'orifices supplémentaires, bordés de lobes auxiliaires à pointe aiguë, rabattus d'un angle donné par rapport au plan de la lamelle.

La figure 3 est une vue de la partie B de la figure 1 agrandie, dans laquelle les lamelles à pointe aiguë principales et auxiliaires ont une hauteur et une largeur plus grandes que sur la figure 2 ;

La figure 4 représente une vue générale en coupe longitudinale du dispositif pour la séparation de matériaux ferromagnétiques des fluides, avec un garnissage ferromagnétique en forme de nombreuses plaques curvilignes ;

La figure 5 est une vue agrandie de la partie 4 à la position des plaques correspondant au régime de service du nettoyage, dans laquelle les lamelles profilées en forme de lobes à pointe aiguë d'une plaque curviligne sont en contact avec la surface de la plaque adjacente ;

La figure 6 montre la même vue que la figure 5, à la position des plaques correspondant à l'opération de régénération du dispositif ;

La figure 7 est une vue générale en coupe longitudinale du dispositif pour la séparation de matériaux ferromagnétiques des fluides suivant laquelle les plaques curvilignes sont disposées en alternance pour que l'une soit concave et la suivante soit convexe ;

La figure 8 est une vue agrandie de la partie D de la figure 7, dans laquelle les saillies profilées des plaques supérieures de la chambre de travail ont la forme de lamelles à pointe aiguë et comprennent des orifices supplémentaires, bordés de lobes auxiliaires à pointe aiguë ;

La figure 9 est une vue agrandie de la partie E de la figure 7, dans laquelle les saillies profilées des plaques inférieures de la chambre de travail ont la forme de lamelles à pointe aiguë et sont exemptes d'orifices auxiliaires ;

La figure 10 est une vue générale en coupe longitudinale du dispositif pour la séparation de matériaux ferromagnétiques des fluides où les plaques forment une bande en zigzag le long de la chambre de travail ;

La figure 11 est une vue générale en coupe longitudinale du dispositif pour la séparation de matériaux ferromagnétiques des fluides où les plaques sont orientées en plan le long de l'axe de la chambre de travail pour qu'en alternance l'une soit concave et l'autre soit convexe ;

La figure 12 est une vue générale en coupe longitudinale du dispositif pour la séparation de matériaux ferromagnétiques où les plaques sont dotées de saillies profilées supplémentaires, conçues sous forme de tiges ;

La figure 13 est une vue agrandie de la partie F de la figure 12 ;

La figure 14 est une vue générale d'une tige à surface extérieure profilée ;

La figure 15 représente une vue de dessus de la tige représentée sur la figure 14 ;

La figure 16 est une vue générale d'une tige aux parties supérieure et inférieure cylindriques aiguës et à diamètre réduit à l'endroit de fixation à la plaque ;

La figure 17 est une vue générale d'une tige en forme de faisceau de fils ferromagnétiques souples ;

La figure 18 est une vue générale d'une tige aux parties supérieure et inférieure coniques aiguës et à section agrandie à l'endroit de fixation à la plaque ;

La figure 19 est une vue générale d'une tige en forme de tube à bouts crénelés ;

La figure 20 représente une vue de dessus de la tige représentée sur la figure 19 ;

La figure 21 est une vue générale en coupe longitudinale du dispositif pour la séparation de matériaux ferromagnétiques des fluides à disposition combinée des plaques, où une partie des plaques situées dans la partie inférieure de la chambre est disposée en alternance pour que l'une soit concave et la suivante soit convexe, dans la partie supérieure de la chambre, toutes les plaques sont concaves ;

La figure 22 représente en coupe longitudinale une version de saillies profilées de forme annulaire à section variable, augmentant du sommet de la saillie à sa base ;

La figure 23 représente en coupe longitudinale une version de saillies profilées de forme annulaire à section variable, crénelées aux bouts ;

La figure 24 est une vue en coupe longitudinale d'une version de saillies profilées sous forme de bordures autour des orifices, rabattues vers l'extérieur par rapport au centre de l'orifice ;

La figure 25 représente en coupe longitudinale des plaques dont la hauteur des saillies est inférieure à l'écart entre deux plaques adjacentes et ces plaques ont, aux emplacements des orifices, des parties convexes ou concaves ;

La figure 26 représente en coupe longitudinale des plaques de forme ondulée ;

La figure 27 est une vue en coupe transversale d'une version du dispositif à système d'aimantation à solénoïde et dont le garnissage ferromagnétique en plaques a la forme de disques plats ;

La figure 28 est une vue en coupe transversale du dispositif à système d'aimantation à électro-aimants dont les pôles sont contigus à la surface latérale de la chambre de travail dans laquelle le sens d'écoulement du fluide à nettoyer est orienté transversalement au vecteur d'induction du champ magnétique ;

La figure 29 est une vue en coupe transversale d'une version du dispositif à garnissage ferromagnétique de plaques en forme de surfaces cylindriques coaxiales, concentriques à la chambre de travail ;

La figure 30 est une vue en coupe transversale d'une version du dispositif à garnissage ferromagnétique de plaques en forme de surfaces cylindriques dont la section transversale est une spirale ;

La figure 31 est un schéma synoptique du dispositif pour la séparation de matériaux ferromagnétiques des fluides, comprenant six chambres de travail, dans lequel les électro-aimants sont étroitement serrés par la surface latérale aux chambres en formant des modules indépendants ;

La figure 32 est un schéma synoptique du dispositif pour la séparation de matériaux ferromagnétiques des fluides, comprenant six chambres de travail, dans lequel les électro-aimants sont en contact étroitement serré par leurs surfaces d'extrémités aux chambres en formant un contour magnétique toroïdal.

La meilleure variante de réalisation

Dans la description qui suit et sur les dessins annexés, les éléments identiques sont désignés par les mêmes références numériques.

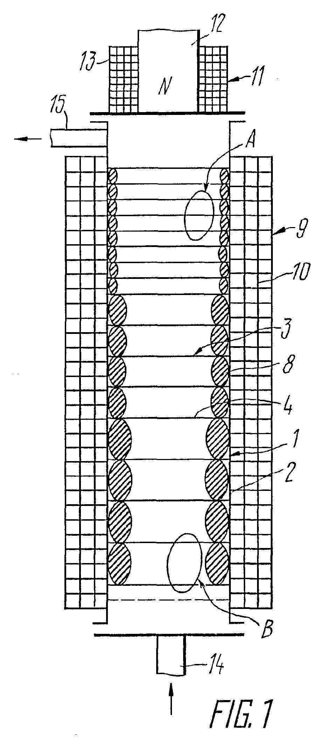

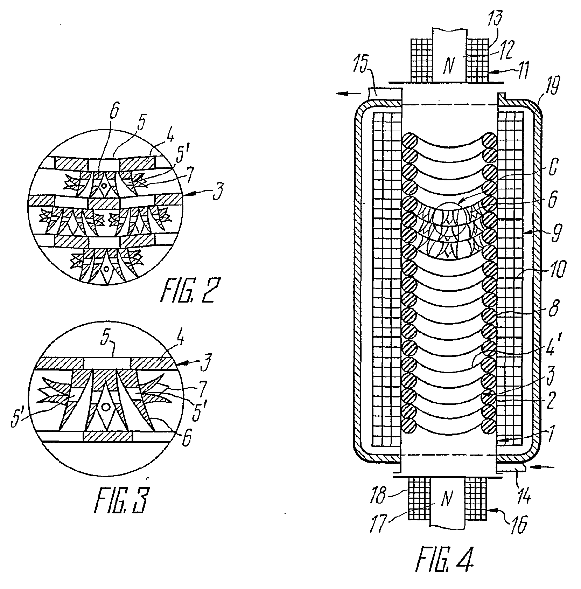

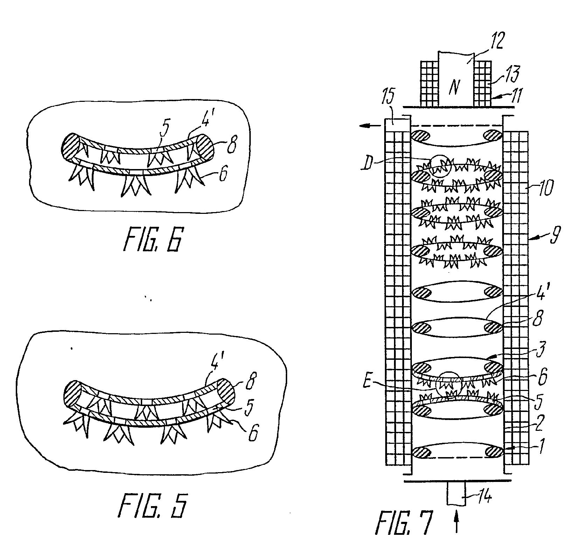

Le dispositif proposé pour la séparation de matériaux ferromagnétiques des fluides, représenté sur les figures 1, 2 et 3 comprend une seule chambre de travail 1. La chambre 1 est formée par un corps cylindrique 2 avec des couvercles d'extrémités 2', et dans laquelle se trouve un garnissage ferromagnétique 3, sous forme de nombreuses plaques 4 plates et souples, percées de trous débouchants 5 et dotés sur le pourtour de saillies profilées 6 en forme de lamelles aiguës orientées suivant un angle donné par rapport au plan des plaques 4. En outre, une partie des saillies profilées 6 est pourvue de trous supplémentaires débouchants 5' ayant des lobes aigus 7 auxiliaires. Entre les plaques 4 se trouvent des entre-lames 8 élastiques, pour lesquelles on peut utiliser un matériau tel que de la gomme résistant à l'eau et aux acides, du caoutchouc, et ou encore d'autres éléments connus, tels que des joints élastiques.

Le dispositif comprend aussi un système d'aimantation 9 situé hors de la chambre 1, constitué dans la version donnée par un solénoïde multi-couche 10. Pour modifier l'écart entre les plaques 4 respectivement et ainsi régulariser la densité de l'empilage du garnissage 3, la chambre de travail 1 est pourvue d'une source auxiliaire 11 de champ magnétique, située hors de la chambre 1 sur le couvercle supérieur 2' et qui assure une interaction magnétique de force avec le garnissage lamellaire 3. Dans le cas où l'action d'une source unique 11 de champ magnétique sur les plaques 4 est insuffisante, c'est-à-dire, ne garantit pas la modification nécessaire de la densité d'empilement des plaques 4, on pose une seconde source auxiliaire sur le couvercle inférieur 2' de la chambre (non représentée sur la figure). La source 11 de champ magnétique est un électro-aimant comprenant un noyau ferromagnétique 12 et une bobine électrique 13. La source 11 peut aussi être un solénoïde dans le cas où le diamètre du corps 2 est très important, par exemple plus de 0,5 m. Dans ce cas, il est plus pratique de placer la source auxiliaire 11 du champ magnétique sur la surface latérale du corps 2, de façon concentrique à celui-ci, de manière analogue au solénoïde 10. Pour alimenter la chambre de travail 1 en fluide à nettoyer et en évacuer le fluide nettoyé, on a prévu des tubulures, d'entrée et de sortie 14, 15 respectivement.

Sur les figures 1, 2, 3 les plaques 4 ont la forme de disques plats, disposés parallèlement l'un envers l'autre, l'écart entre ceux-ci va en décroissant depuis la tubulure d'entrée 14 jusqu'à la tubulure de sortie 15. Le nombre de saillies profilées principales 6 et de lobes auxiliaires 7, leur hauteur et les dimensions des orifices 5 et 5' varient également de la tubulure d'entrée 14 à la tubulure de sortie 15. Cette particularité de structure assure un "encombrement" régulier dans le temps par les particules d'impuretés de tout le volume du garnissage 3, en prolongeant sa durée de service en régime de nettoyage efficace jusqu'à la régénération suivante. La distance entre les plaques 4 est réglée à l'aide des entre-lames élastiques 8 qui, en se compressant ou en se rélâchant sous l'action des plaques et sous l'effet de la source auxiliaire d'aimantation 11 de champ magnétique et du solénoïde 10, assurent la densité nécessaire d'empilement du garnissage 3 et la mise en contact ou non des saillies 6 avec la surface des plaques 4.

La valeur moyenne de l'induction du champ magnétique dans le garnissage 3 et le nombre des zones de champ magnétique inhomogène augmentent lorsqu'on réduit la hauteur des saillies profilées 6, qu'on accroît le nombre d'orifices 5, 5' par unité de surface des plaques 4 en direction du mouvement du fluide à nettoyer, comme le montre les figures 2, 3. Pour une masse identique de métal des plaques 4 par unité de volume, c'est-à-dire, pour une densité constante d'empilement des plaques 4 dans tout le volume de garnissage 3, l'action de force du champ sur les particules d'impureté augmente en raison de la formation, dans les lamelles principales aiguës, de saillies profilées 6. d'orifices supplémentaires 5' bordés des lobes auxiliaires aigus 7 et rabattus suivant un angle donné par rapport à la surface de la lamelle principale 6 pourvues d'orifices supplémentaires 5' augmente le long de la chambre 1 depuis la tubulure d'entrée 14 jusqu'à la tubulure de sortie, comme le montre les figures 1, 2, 3.

Une version du dispositif selon l'invention représentée sur les figures 4, 5 et 6, différente de la version des figures 1, 2 et 3, comprend les plaques souples 4' curvilignes et une seconde source auxiliaire 16 de champ magnétique constituée par un électro-aimant situé hors de la chambre 1 sur le couvercle inférieur 2'. La source 16 de champ magnétique comprend un noyau 17 et une bobine électrique 18 et est placée de manière analogue à la source 11 de champ magnétique. Les plaques 4' sont curvilignes, ont la même courbure et sont disposées en hauteur par rapport à la chambre 1 régulièrement, à une même distance l'une de l'autre. Dans les plaques 4', dans le courant du fluide à nettoyer, les saillies profilées 6 comportent des orifices supplémentaires 5', bordés des lobes auxiliaires 7 rabattus suivant un angle donné par rapport au plan des saillies 6. Ici, le nombre de saillies principales 6 augmente le long de la chambre 1 depuis la tubulure d'entrée 14 jusqu'à la tubulure de sortie (pour simplifier les figures, les orifices 5' et les saillies 7 ne sont pas présentés sur les figures 4, 5, 6, puisqu'ils ont une forme identique à celles des saillies 7 etdes orifices 5' des figures 2 et 3). Pour créer un contour magnétique fermé dans le dispositif, une enveloppe ferromagnétique 19 est disposée en dehors du solénoïde 10, celle-ci permettant de réduire les pertes de champ magnétique dans l'environnement. L'électro-aimant 16 assure la régulation nécessaire de la densité du garnissage lamellaire 3, le décomptage et la compression des plaques 4'. La seconde source auxiliaire 16 de champ magnétique est surtout recommandée dans le cas où l'épaisseur de la couche du garnissage 3 atteint 1,0 m et plus et dans le cas où il faut intensifier l'agitation des plaques 4' pour évacuer, par exemple, les impuretés fortement magnétiques de la surface des plaques 4'.

Les figures 5, 6 montrent les positions des plaques 4' en régime de nettoyage (figure 5) et en régime de régénération (figure 6). Sur la figure 5, les saillies profilées 6, en forme de lamelles aiguës de la plaque supérieure 4', sont en contact avec la surface de la plaque inférieure 4' en formant une zone de champ magnétique à gradient élevé aux points où se déroule le processus de précipitation des impuretés. La régénération s'effectue suite à la disjonction des points de contact des saillies profilées 6 et de la surface des plaques 4' (figure 6) sous l'action des sources 11, 16 de champ magnétique et des entre-lames élastiques 8.

Les figures 7, 8, 9 représentent une version du dispositif où les plaques curvilignes 4' sont disposées dans la chambre de travail 1 en alternance : une plaque 4' concave et la suivante convexe, entre chaque plaque s'intercalant une entre-lame élastique 8. Une telle disposition alternée des plaques curvilignes 4' dotées de propriétés élastiques, permet dans une large gamme de modifier simplement du point de vue technique la densité de l'empilement du garnissage 3, d'augmenter ou de réduire le nombre des points de contact des saillies 6 et des plaques 4' et respectivement le nombre des zones de champ magnétique inhomogène. Le nombre des saillies profilées 6 augmente dans le sens du mouvement du fluide dans la chambre 1. Par exemple, dans les couches inférieures de garnissage 3, les saillies profilées 6 ne sont pas pourvues d'orifices supplémentaires 5', mais à partir de la mi-hauteur de la couche du garnissage lamellaire 3, les orifices supplémentaires 5' respectivement, les saillies supplémentaires sous forme de lobes aigus 7 apparaissent dans les saillies profilées 6.

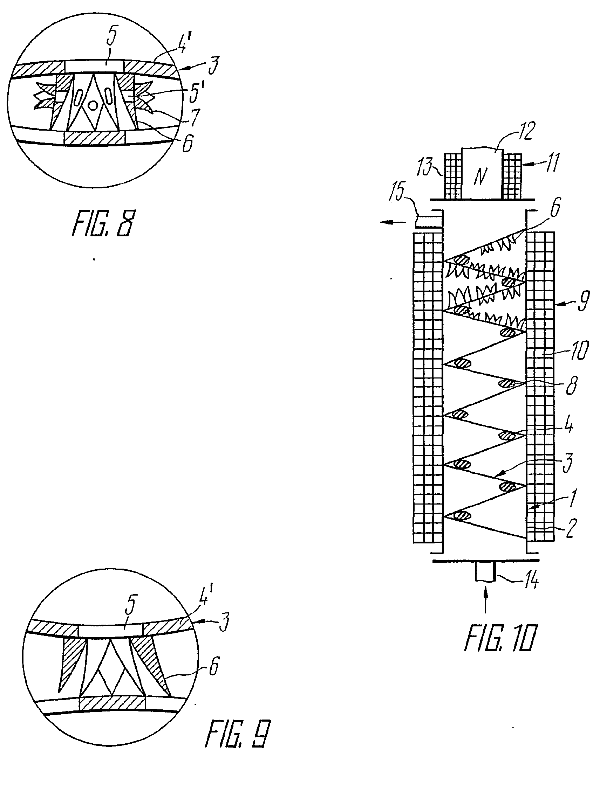

Une version du dispositif représentée sur la figure 10, différente de la version de la figure 1, comprend les plaques 4 à saillies profilées 6, reliées de manière que chaque plaque 4 précédente est reliée par son extrémité au commencement de la plaque suivante 4 et ainsi, le long de l'axe de la chambre de travail 1, est formée une bande de plaque 4 en zigzag. Le garnissage lamellaire 3 sous forme de bande en zigzag assure une disjonction nette des plaques 4 et un ameublement des dépôts précipités, ce qui contribue à la régénération jusqu'au niveau requis, surtout lors du nettoyage de fluides très concentrés et huileux, par exemple, lors du nettoyage d'eaux de circulation qui nécessitent une faible densité d'empilement et une épaisseur réduite de la couche du garnissage.

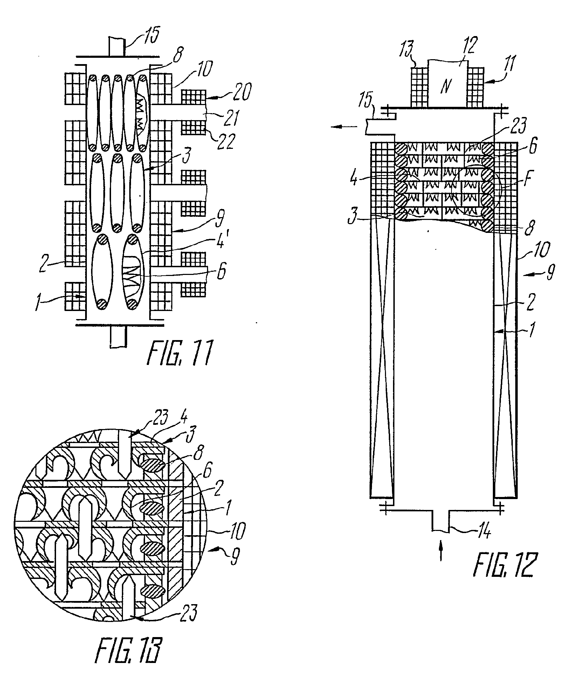

La figure 11 représente une version du dispositif selon l'invention où les plaques souples curvilignes 4' sont disposées en alternance pour que l'une soit concave et la suivante convexe. De plus, les plaques 4' sont orientées suivant la surface longeant l'axe de la chambre de travail 1. La disjonction et la vibration des plaques 4' en régime de régénération sont réalisées à l'aide des électro-aimants 20 situés sur la surface latérale de la chambre de travail 1. Les électro-aimants 20, constitués chacun d'un noyau 21 et d'une bobine électrique 22, sont répartis en hauteur dans la chambre de travail 1 et peuvent fonctionner indépendamment l'un de l'autre. Dans cette version du dispositif, le solénoïde 10 est conçu avec des sections séparées, réparties en hauteur dans la chambre 1. Les noyaux 21 des électro-aimants 20 sont orientés perpendiculairement au plan des plaques 4' et sont placés dans les espaces situés entre les sections du solénoïde 10 et sont en outre étroitement appliqués par leurs extrémités à la surface latérale de la chambre 1. En branchant et débranchant par impulsion les électro-aimants 20 en régime de régénération, on assure une agitation par impulsion des plaques 4', ce qui provoque la disjonction des plaques 4', l'ameublement des dépôts des particules d'impureté de façon à faciliter leur évacuation.

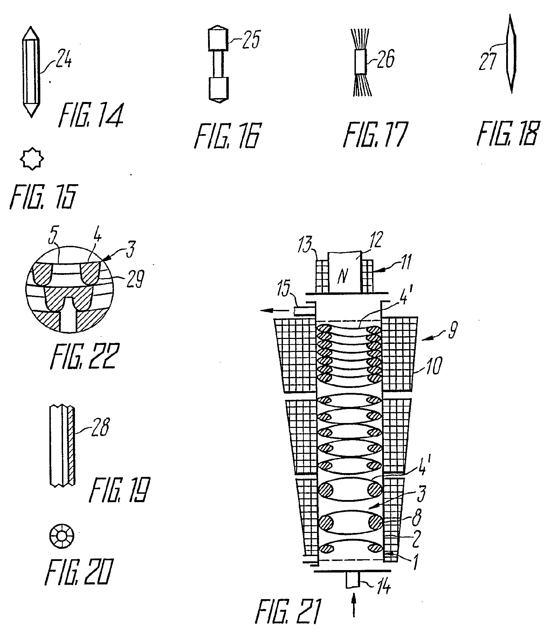

Une version du dispositif représentée sur les figures 12, 13 diffère de la version de la figure 1 en ce que les plaques 4 sont pourvues de saillies profilées supplémentaires 23 sous forme de tiges de longueur égale à la distance entre toutes les deux plaques 4 voisines impaires, rigidement fixées dans les plaques 4 paires. Les tiges ferromagnétiques 23 peuvent avoir la forme de segments aigus 24 (figures 14, 15) avec des cannelures sur la surface extérieure ou encore avoir la forme de segments aigus 25 (figure 16) à section transversale variable et rétrécie dans la partie centrale et élargie aux extrémités, ou sous la forme d'un faisceau de fils fins souples 26 (figure 17), ou sous la forme de tiges 27 (figure 18) pointues, ou sous la forme de tubes 28 (figures 19, 20) à extrémités cannelées.

Dans les cas où on utilise le dispositif pour nettoyer des fluides à forte concentration qui contiennent principalement des impuretés de dimensions moyennes et à dispersion grossière, les tiges 23 ont une longueur inférieure à la distance entre les plaques 4 impaires voisines (figures 12, 13). Une utilisation avantageuse d'un garnissage 3 lamellaire combiné avec les tiges 23 est définie de la manière suivante. Dans les plaques 4 sans tiges , on peut atteindre la densité maximale des orifices 5 sur la surface des plaques 4 quand l'écart entre les orifices adjacents 5 est minimal, ce qui dépend de l'épaisseur et du matériau des plaques 4, de la qualité du perçage des orifices 5 dans les plaques 4. Dans la séparation formée entre les orifices 5, on peut percer des orifices supplémentaires mais de diamètre beaucoup plus réduit que celui des orifices principaux 5. Il en résulte la formation de lobes de dimensions beaucoup plus petites et, par conséquent, le contact entre les plaques 4 ne s'effectue que par l'intermédiaire des saillies 6 des orifices 5 principaux (grands). Dans la version proposée du dispositif, représentée sur les figures 12 et 13, le nombre de points de contact entre les plaques 4 du garnissage 3 augmente en raison des points supplémentaires de contact entre les tiges 23 et les plaques 4, ce qui signifie que le nombre des zones effectives de précipitation magnétique des impuretés augmente.

En outre, la mise en jeu des tiges 23 dans les plaques 4 augmente la densité d'empilement du garnissage 3 dans son ensemble, c'est-à-dire qu'elle augmente la concentration de matériau ferromagnétique par unité de volume du garnissage 3, ce qui conduit, à une intensité du champ extérieur égale, à un accroissement de la perméabilité magnétique (M) du garnissgae 3 et, par conséquent, à une augmentation de l'induction du champ, à un accroissement de l'action de force du champ sur les impuretés de précipitation et, en fin de compte, à une augmentation de l'efficacité de l'opération de nettoyage, ce qui est particulièrement avantageux pour le nettoyage de fuides contenant des impuretés finement dispersées, par exemple, des eaux des centrales électriques, atomiques ou thermiques.

Pour éliminer les irrégularités de répartition du champ magnétique (dans les zones polaires et centrales quand on utilise des électro-aimants comme système d'aimantation et aussi dans les zones des parois et centrales quand on utilise des solénoïdes), les tiges 23 sont fabriquées en matériaux possédant des propriétés magnétiques différentes, qui compensent la variation du champ magnétique suivant sa répartition dans le volume du garnissage 3. Par exemple, dans les zones du garnissage 3 à haute intensité de champ magnétique, les tiges 23 sont fabriquées en acier magnétique doux à teneur basse en carbone, tandis que dans les zones à faible intensité de champ, on choisira un matériau à perméabilité magnétique allant de 5000 à 50.000. Pour créer des zones de champ magnétique inhomogène et augmenter la perméabilité magnétique, il est avantageux que les extrémités des tiges-segments 25 (figure 16) comportent des renflements. Aux endroits de divergence de la section des segments 25, des zones locales de champ magnétique à gradient élevé se créent, ce qui contribue à augmenter les performances du nettoyage magnétique. A cette fin, la surface des tiges-segments 24 (figures 14, 15) est cannelée, tandis que les bouts des tiges-tubes 28 (figures 19, 20) sont striés de façon à créer sur ces pointes des zones de champ magnétique inhomogène. Les tiges pointues 2 (figure 18) forment, au contact avec la surface de la plaque 4, une zone à champ magnétique très inhomogène, ce qui assure la précipitation des impuretés magnétiques douces. En outre, les tiges pointues 27 aculéiformes n'opposent quasiment aucune résistance à l'écoulement du fluide à nettoyer. La forme des tiges 23, rigidement fixées dans les plaques 4 paires et ayant dans un cas leurs extrémités en contact avec les plaques 4 impaires et dans l'autre cas n'en ayant pas, est liée à la nécessité d'identifier les conditions du processus de précipitation dans le volume du garnissage 3. Par exemple, les tiges 23 sont courtes pour éviter leur contact avec les plaques 4 voisines les plus proches et sont installées dans les zones du garnissage 3 à intensité de champ magnétique élevée, tandis que dans l'autre cas, les tiges 23 sont plus longues pour assurer un contact avec les plaques 4 et sont installées dans les zones du garnissage 3 à intensité de champ magnétique réduite.

Les tiges en forme des tubes 28 (figures 19, 20) cannelés aux extrémités augmentent la surface de contact des éléments du garnissage 3 et du fluide à nettoyer ainsi que le nombre des faces aiguës (concentrateurs de champ magnétique sur lesquels se créé un champ à gradient élevé). Les orifices des tubes 28 servent aussi à réduire la vitesse de filtration, c'est-à-dire, à augmenter la durée de l'action magnétique sur les impuretés précipitées grâce à l'augmentation de la surface de la section vive du garnissage 3.

Lors du nettoyage de milieux liquides contenant des impuretés finement dispersées magnétiques douces, l'intensité du champ extérieur en direction du mouvement du fluide à nettoyer s'équilibre en intensité croissante ce qui est provoqué, par exemple, par l'augmentation du nombre de spires de la bobine du solénoïde 10 (figure 21) dans le sens et dans la direction entraînant une augmentation de la densité de la disposition des plaques 4' du garnissage 3.

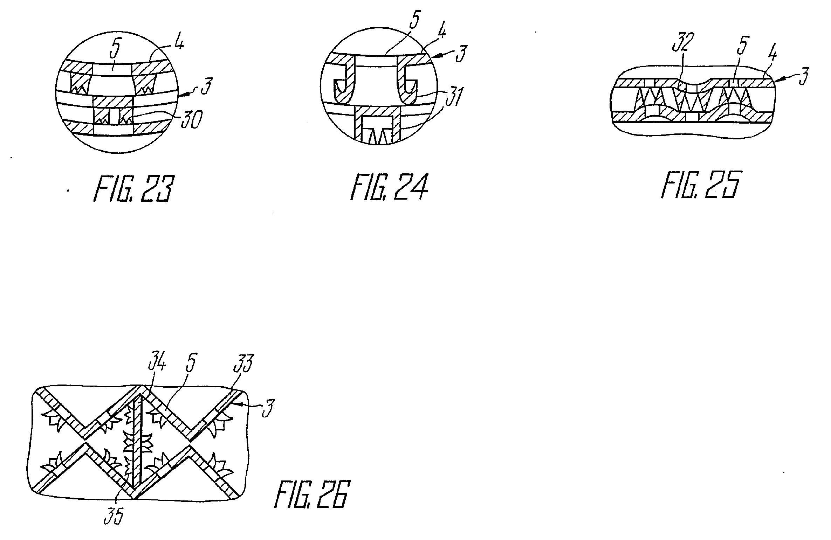

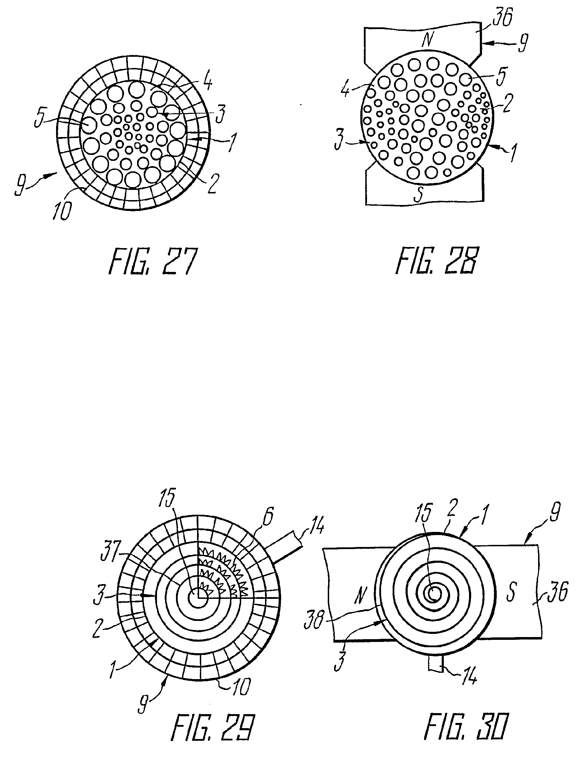

Pour leur part, les grosses particules d'impureté du fluide à nettoyer se précipitent sur les saillies 6 qui ne sont pas en contact avec les plaques 4', tandis que les impuretés finement dispersées se précipitent aux points de contact des saillies 6 avec la surface des plaques 4'. Pour agrandir les zones de champ à gradient élevé, on utilise les plaques 4 à saillies profilées 6 de différentes formes, par exemple, à saillies profilées 29 (figure 22) de forme annulaire et à section variable s'élargissant depuis le sommet de la saillie 29 vers sa base et formant un contact avec la plaque adjacente sur leurs périphéries. Les saillies profilées 30 représentées sur la figure 23, sont différentes en ce que leurs surfaces d'extrémités sont crénelées de façon qu'il se forme plusieurs cercles de contact des saillies 30 avec les plaques adjacentes 4, ce qui crée une grande quantité de zones de champ magnétique inhomogène. Les saillies 31, représentées sur la figure 24, sont des bordures formées sur la périphérie des orifices 5 et rabattues vers l'extérieur par rapport au centre des orifices 5. La fabrication de cette forme de saillie est technologiquement poussée et il est recommandé d'employer les plaques 4 à saillies 31 pour nettoyer des fluides fortement pollués, contenant des impuretés grossièrement dispersées. Les saillies 31 visibles sur la figure 24 sont en forme de bordures formées à la périphérie des orifices, assurent les points de contact avec les plaques 4 et en outre, créent aussi des zones de champ magnétique inhomogène près des bords aigus des rebords rabattus vers l'extérieur, où se déposent les impuretés grossièrement dispersées et fortement magnétiques.

Pour augmenter la densité d'empilement et la perméabilité magnétique du garnissage 3, les plaques 4 ont une hauteur de saillies profilées 32 (figure 25) plus faible que l'écart entre deux plaques 4 voisines, tandis que les mêmes plaques 4 sont profilées et ont, à l'empilement des orifices 5, des aires concaves ou convexes dont la profondeur par rapport au plan de la plaque 4 met, en combinaison avec la hauteur de la saillie profilée 32, cette dernière en contact avec la plaque 4 suivante. Ici, le parcours du milieu liquide à travers le garnissage 3 peut aussi être prolongé si on dispose alternativement les orifices 5 dans les plaques 4 qui se succèdent. Lors du nettoyage des fluides contenant une importante concentration d'impuretés fortement magnétiques, la taille du parcours effectué par le fluide à travers le garnissage 3 peut être augmentée en conservant les zones de champ magnétique inhomogène quand on utilise les plaques gaufrées 33 (figure 26) ondulées, entre lesquelles sont placées les cloisons lamellaires 34 supplémentaires aux saillies 35.

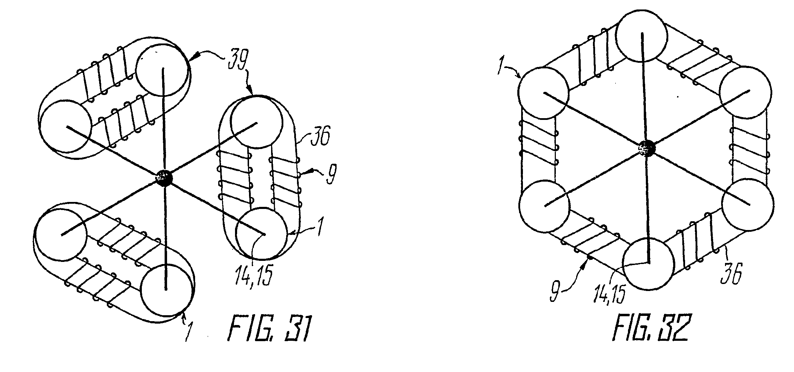

Dans les dispositifs à grand rendement, quand on utilise comme système d'aimantation 9 (figure 27) les solénoïdes 10 pour compenser l'induction affaiblie du champ magnétique dans la zone de l'axe du solénoïde d'un volume de 20 à 30%, on augmente l'agencement des orifices 5 à saillies profilées dans cette zone de chacune des plaques de 20 à 30% par rapport à sa zone périphérique. Quand on utilise comme système d'aimantation 9 (figure 28) l'électro-aimant bipolaire 36, dont les pôles sont contigus à la surface latérale de la chambre de travail 1 où le vecteur d'écoulement du fluide à nettoyer est orienté transversalement au vecteur de l'induction du champ magnétique, les orifices 5 à saillies sont répartis sur chaque plaque 4 de manière que leur nombre dans la zone de la plaque 4, la plus éloignée des pôles de l'électro-aimant 36, est augmenté de 20 à 30% par rapport aux zones voisines des pôles.

Le garnissage ferromagnétique 3, dans une version représentée sur la figure 29, est constitué par des plaques 37 en forme de surfaces cylindriques coaxiales. De plus, l'écart entre les plaques 37 diminue depuis la tubulure d'entrée 14, située sur la surface latérale de la chambre 1 à mi-hauteur de la chambre 1, jusqu'aux tubulures de sortie 15, situées sur les faces de la chambre 1. Dans une version du dispositif, représentée sur la figure 30, le garnissage 3 se compose de plaques 38 en forme de surfaces cylindriques dont la coupe transversale est une spirale dont l'écart entre les spires voisines diminue depuis la tubulure d'entrée 14 jusqu'aux tubulures de sortie 15 situées de manière indiquée ci-dessus lors de la description de la version du dispositif illustré sur la figure 29.

Afin de réduire les pertes de flux magnétique dans l'environnement, les chambres de travail 1 (figure 31) du dispositif selon l'invention, tout comme les électro-aimants 36, sont réunies par deux chambres de façon à constituer des modules 39 formant un complexe, par exemple, de trois modules 39 indépendants, de fonctionnement autonome. Par exemple, deux modules 39 fonctionnent en régime de nettoyage du fluide, et un en régime de régénération.

Les chambres de travail 1 (figure 32) peuvent aussi être reliées aux électro-aimants 36 selon un autre schéma, en formant, alors par exemple six chambres 1 ayant un contour magnétique annulaire dans lequel les noyaux des électro-aimants 36 sont contigus aux corps des chambres de travail 1 par leur embout.

Le dispositif pour la séparation de matériaux ferromagnétiques des fluides fonctionne de manière suivante.

Le fluide à nettoyer, liquide ou gazeux, arrive par la tubulure d'entrée 14 (figure 1) dans la chambre de travail 1 où se trouve le garnissage ferromagnétique 3 constitué des nombreuses plaques 4 jusqu'aux trous débouchants 5 disposant sur leur périmètre de saillies profilées 6. Sous l'action du champ magnétique créé par le système magnétique 9 et conçu sous forme du solénoïde multicouche 10, le garnissage ferromagnétique lamellaire 3 s'aimante pour créer alors aux points et aux lignes de contact des saillies profilées 6 et des plaques 4, des zones de champ magnétique à gradient élevé où se déposent les impuretés du fluide à nettoyer sous l'action de la force magnétique F : H gradH, où F est la force de l'action magnétique, H est l'intensité du champ magnétique, gradH est le gradient de ce champ.

En faisant varier le nombre de saillies profilées 6 et de lobes aiguës 7 auxiliaires, on peut élever le niveau de l'opération de nettoyage du fluide jusqu'à la valeur requise calculée précédemment. Grâce aux lobes aiguës auxiliaires 7, le nombre de points et de lignes de contact peut en plus être augmenté de 3 à 4 fois. Le nombre des zones de champ magnétique à gradient élevé, respectivement, augmente aussi. Le fluide nettoyé de ses impuretés après son passage par la couche du garnissage 3, est évacué par la tubulure 15. Alors, en fonction des dimensions des particules d'impureté ainsi que de leurs propriétés magnétiques et de la viscosité du fluide, dans le dispositif proposé où le nombre des saillies profilées 6, l'écart entre les plaques 4, la hauteur des saillies profilées 6, leur forme varient dans une large gamme dans le sens de l'écoulement du fluide à nettoyer, depuis la tubulure d'entrée 14 jusqu'à la tubulure de sortie 15. Par exemple, la densité de l'empilement du garnissage varie de 0,05 à 0,6, voire plus. En outre, les dimensions des orifices 5, des saillies profilées 6, sont variables dans le dispositif, non seulement suivant la hauteur de la chambre de travail 1, mais aussi suivant la surface de chaque plaque 4 (figures 27, 28).

Par exemple, pour les fluides où dominent des impuretés faiblement magnétiques et finement dispersées, il est impératif d'utiliser les versions du dispositif représentées sur les figures 1, 2, 3 et 12, caractérisées par un grand nombre de saillies profilées 6 par unité de volume de garnissage 3. De plus, la densité d'empilement du garnissage 3 doit varier de 0,4 à 0,6. Dans ce cas, l'induction moyenne du champ dans le garnissage 3 atteint 1,1 à 1,6 T. Pour les fluides où dominent des impuretés fortement magnétiques et grossièrement dispersées, il est recommandé d'utiliser les versions du dispositif représentées sur les figures 7, 8, 9, 10, 11 et 21. Ici, il est recommandé de faire varier la densité du garnissage 3 de 0,1 à 0,3. L'induction moyenne du champ dans le garnissage 3 atteint 0,4 à 0,7 T.

Lors du nettoyage de fluides visqueux et quand un secouage efficace est nécessaire pour disjoindre les plaques 4, il est recommandé d'utiliser les versions du dispositif à plaques curvilignes 4', élastiques et à plaques 4 assemblées en bande formant zigzag (figures 4, 7, 10, 11, 21).

Pour régénérer le garnissage 3, on débranche le système d'aimantation 9 et on commute alors l'amenée du fluide à nettoyer sur les chambres de travail 1 de réserve (modules 39, figure 31). Sur les chambres de travail 1 à régénérer, on branche et débranche périodiquement, par impulsions, les sources auxiliaires 11, 16, 20 de champ magnétique. Sous l'action du champ magnétique de force de courte durée, les plaques 4 sont attirées vers les pôles des sources 11, 20, 16. Au débranchement de l'alimentation des bobines 13, 18, 22, les plaques 4, sous l'action des forces élastiques et de pesanteur,

EP 0 374 251 A1

- 30 -

reviennent en position initiale. Ces branchements et débranchements sont répétés plusieurs fois. Il en résulte la disjonction des points et des lignes de contact des saillies 6 et des plaques adjacentes 4 et l'ameublement du dépôt d'impuretés. Les déformations élastiques des plaques 4 réduisent leur aimantation résiduelle qui peut atteindre une valeur négligente par rapport à l'induction utile du champ. Par la tubulure 15 et à l'aide d'air comprimé ou de mélange air-eau, on fait évacuer les dépôts d'impuretés ameublis dans un système de drainage.

Exemple 1.

On a soumis au nettoyage les centrales électriques atomiques et thermiques, qui contenaient des impuretés à concentration relativement basse, 20 à 200 µg/kg (pour un degré requis de nettoyage 10 µg/kg). De plus, la gamme (les dimensions) des impuretés varie de 0,01 à 5 µm alors que les impuretés ont des propriétés magnétiques différentes. Les expériences ont montré que la vitesse optimale de filtration de ces condensats était de 150 à 300 m/heure, la longueur du garnissage 3 était définie de 0,8 à 1,2 m. Pour nettoyer ces condensats relativement "propres", il faut créer une intensité de champ magnétique aux points de contact pouvant atteindre 400 à 800 kA/m. Pour un "encombrement" identique et uniforme du garnissage 3 par les impuretés sur toute la longueur du garnissage 3, on a constitué une densité variable d'empilement et un nombre variable de zones de champ à gradient élevé le long du garnissage 3, c'est-à-dire, une densité croissante d'empilement et un nombre croissant de zones de champ magnétique ayant un gradient élevé dans le sens d'écoulement du fluide à nettoyer.

Dans ce cas, la couche du garnissage 3 a été éventuellement divisée en trois ou quatre zones suivant la hauteur de la couche du garnissage 3. Dans la première zone rencontrée lors d'écoulement du fluide, on a établi une densité d'empilement de 0,3 ; dans la deuxième zone, 0,4 ; dans la troisième, 0,5 et dans la quatrième, 0,6. Une augmentation de la densité d'empilement au-delà de 0,6 est liée à un accroissement de la vitesse du courant du fluide dans les canaux à pores (le rôle de l'hydrodynamique augmente), ce qui réduit le rôle de l'accroissement de la densité de l'empilement et, respectivement, de la perméabilité magnétique de tout le garnissage 3. En fonction de la densité calculée d'empilement, on estampe dans les plaques 4 les orifices 5 (ronds ou en forme de triangles, de polygones). Dans le cas proposé, on a donné à ceux-ci une forme telle que les saillies profilées 6 sont aiguës et de longueur différente. Par exemple, l'orifice 5 a été percé à l'aide d'une estampe de section penta- ou hexagonale, ou alors, on a soudé autour de l'orifice 5 par points, des anneaux à stries variables. Dans la troisième et quatrième zones, on a pratiqué les orifices supplémentaires 5' dans les lamelles 7 des saillies profilées 6 des plaques 4. Dans ce cas, les couches inférieures du garnissage 3, reçoivent les impuretés grossièrement dispersées dans la zone médiane du garnissage 3 se déposent les impuretés de fraction moyenne et dans la zone supérieure du garnissage 3, de dimensions plus petites, de l'odre du micron. On observe alors un "encombrement" par les impuretés, presque identique de tout le volume du garnissage 3, ce qui, à son tour, fait augmenter la période de filtration (c'est-à-dire la durée entre deux opérations successives de régénération) et ainsi réduit la durée non productive due à un arrêt du dispositif lors de la régénération.

Lors de la régénération du garnissage 3, on débranche le champ magnétique, et alors, les plaques 4, actionnées par les entre-lames élastiques 8, se desserrent. Lors du branchement et des impulsions des électro-aimants 11, les plaques 4 se déplacent de haut en bas par impulsions en rendant meuble les impuretés déposées, et en soufflant simultanément un mélange air-eau par la tubulure 15, les dépôts des particules d'impuretés sont emportés vers le drainage.

Exemple 2.

Lors du nettoyage de l'eau de circulation d'un laminoir pour la production métallurgique où la concentration des impuretés atteint 6000 à 12.000 µg/kg, la densité nécessaire d'empilement du garnissage 3 est inférieure à celle de l'exemple précédent, elle a été définie dans les limites égales à 0,1 à 0,35 ; la vitesse d'écoulement du fluide est de 400 à 1200 m/h, la longueur du garnissage 3 est établie de 0,2 à 0,4 m. Par calcul, on a alors défini le nombre de saillies profilées 6 dans les plaques 4 et, respectivement, dans les zones du garnissage 3 dans le volume de la chambre 1. Alors, on a placé, dans la chambre de travail 1, et dans le sens de l'écoulement du fluide, des plaques 4 en forme de saillies profilées 6 telles que par exemple, dans la partie inférieure des saillies 30 en forme d'anneaux (figure 22), dans la partie médiane des plaques 4 des saillies 6 en forme de rebords 31 (figure 24) et dans la partie supérieure des plaques 4 aiguës des saillies en éventail aiguës 32 (figure 25). La période de filtration et la capacité d'absorption, par rapport à l'antériorité, augmentent alors de 30 à 40% respectivement, l'efficacité de nettoyage, de 30 à 40%.

Application industrielle

Le dispositif pour la séparation de matériaux ferromagnétiques des fluides, conçu selon la présente invention, peut être utilisé dans l'industrie chimique, métallurgique, la construction mécanique, la production d'énergie thermique, biologique et aussi pour nettoyer les eaux usées et les gaz, de préférence, pour l'épuration fine, par exemple, de condensats, d'eaux de circulation, d'huiles, d'ammoniac, d'alcalis, de vapeur, de gaz et d'autres fluides comportant des produits de corrosion des appareillages, des produits d'usure des pièces de machines et de mécanismes, ou encore de la calamine dispersée.

Revendications

1. Dispositif pour la séparation de matériaux ferromagnétiques des fluides, comprenant une chambre de travail (1) pourvue d'un garnissage ferromagnétique (3) sous forme de nombreuses plaques (4) percées de trous débouchants (5), dotés sur le contour de saillies profilées (6), orientées suivant un angle déterminé par rapport à la surface des plaques (4), un système d'aimantation (9) adapté pour l'interaction avec le garnissage ferromagnétique (3) et pour l'aimanter, une tubulure d'entrée (14) alimentant la chambre de travail (1) en fluide à nettoyer et une tubulure de sortie (15) servant à recevoir le fluide nettoyé après son passage à travers le garnissage (3), caractérisé en ce que l'agencement des orifices (5) sur la plaque (4), leurs dimensions, leur configuration, la forme des saillies (6), l'écart entre les plaques (4), sont variables suivant le volume de la chambre de travail (1) et en fonction des propriétés magnétiques des particules d'impureté du fluide à nettoyer ainsi que de leurs dimensions et de la concentration et de la viscosité du fluide.

2. Dispositif suivant la revendication 1, caractérisé en ce que des plaques (4') sont fabriquées en matériau élastique et ont toutes une forme curviligne identique et sont pourvues d''entre-lames (8) élastiques placés entre les plaques (4').

3. Dispositif suivant l'une quelconque des revendications 1 et 2, caractérisé en ce que les saillies profilées (6) ont la forme de lamelles à pointe aiguë, et qu'au moins sur une partie de celles-ci est percé un orifice supplémentaire (5') bordé de lobes (7) auxiliaires ayant une pointe aiguë rabattue suivant un angle déterminé par rapport à la lamelle, alors que le nombre des lamelles principales pourvues des orifices auxiliaires (5') augmente dans le sens de l'écoulement du fluide depuis la tubulure d'entrée (14) jusqu'à la tubulure de sortie.

4. Dispositif suivant la revendication 3, caractérisé en ce que les plaques curvilignes (4') sont disposées dans la chambre de travail (1) en alternance, de façon qu'une soit concave et la suivante soit convexe.

5. Dispositif suivant l'une quelconque des revendications 1 à 3, caractérisé en ce qu'il est pourvu d'au moins une source auxiliaire (11) de champ magnétique située hors de la chambre de travail (1) de façon que le vecteur de son champ magnétique soit orienté le long de l'axe de la chambre de travail (1).

6. Dispositif suivant la revendication 1, caractérisé en ce que chaque plaque (4) du garnissage ferromagnétique (3) est reliée par une extrémité au commencement de chaque plaque suivante (4) de manière que le long de l'axe de la chambre de travail (1) se forme une bande de plaques (4) en zigzag.

7. Dispositif suivant l'une quelconque des revendications 1 à 3, caractérisé en ce que les plaques (4) sont disposées parallèlement l'une par raport à l'autre et que l'écart entre deux plaques adjacentes va en décroissant depuis la tubulure d'entrée (14) jusqu'à la tubulure de sortie.

8. Dispositif suivant la revendication 7, caractérisé en ce que la hauteur des saillies profilées (6) est égale à l'écart entre deux plaques adjacentes (4) de manière que les bouts des saillies (6) de la plaque précédente (4) se trouvent en contact avec les surfaces des plaques suivantes (4).

9. Dispositif suivant la revendication 1, caractérisé en ce que la dimension des orifices (5) des plaques (4) diminue depuis la tubulure d'entrée (14) jusqu'à la tubulure de sortie.

10. Dispositif suivant l'une quelconque des revendications 1 et 2, caractérisé en ce que les saillies profilées (29) ont une forme d'anneau à section variable, croissante depuis son sommet de la saillie (29) jusqu'à sa base.

11. Dispositif suivant la revendication 10, caractérisé en ce que la surface en bout de la saillie annulaire (30) est crénelée.

12. Dispositif suivant la revendication 1, caractérisé en ce que les saillies profilées (31) sont exécutées de façon à former des rebords sur le périmètre des orifices (5), rabattus vers l'extérieur par rapport au centre de l'orifice (5).

13. Dispositif suivant la revendication 1, caractérisé en ce que la hauteur des saillies profilées (32) est inférieure à l'écart entre deux plaques (4) adjacentes et que ces plaques (4) sont dotées, aux endroits des orifices (5), d'aires concaves ou convexes dont la profondeur par rapport au plan des plaques (4) assure, en combinaison avec la hauteur de la saillie (32), le contact de cette dernière avec la surface de la plaque adjacente (4).

14. Dispositif suivant l'une quelconque des revendications 1 et 2, caractérisé en ce que les plaques (4) sont dotées de saillies profilées supplémentaires ayant la forme de tiges (23).

15. Dispositif suivant la revendication 14, caractérisé en ce que les tiges (23) sont rigidement fixées aux plaques (4) paires et ont une longueur égale à l'écart entre toutes les deux plaques (4) impaires voisines.

16. Dispositif suivant la revendication 14, caractérisé en ce que les tiges (23) sont rigidement fixées aux plaques (4) paires et ont une longueur inférieure à l'écart entre toutes les deux plaques (4) impaires voisines.

17. Dispositif suivant la revendication 14, caractérisé en ce que les tiges sont fabriquées en forme de faisceau de fils ferromagnétiques souples (26).

18. Dispositif suivant la revendication 14, caractérisé en ce que les tiges (25) ont une section transversale variable.

19. Dispositif suivant la revendication 14, caractérisé en ce que les tiges sont conçues en forme de tubes (28).

20. Dispositif suivant la revendication 1, où le système d'aimantation (9) est un solénoïde (10), caractérisé en ce que les plaques (4) ont la forme de disques plats et le nombre de saillies profilées (6) de chaque disque (4) augmente depuis la périphérie jusqu'au centre du disque.

21. Dispositif suivant la revendication 1, où le système d'aimantation est un électro-aimant (36) bipolaire dont les pôles sont contigus à la surface latérale de la chambre de travail (1) dans laquelle le sens d'écoulement du fluide à nettoyer est orienté transversalement au vecteur d'induction du champ magnétique, caractérisé en ce que les saillies (6) sont réparties sur les plaques (4) de manière que leur

- 38 -

nombre augmente dans la zone de chaque plaque (4) qui est la plus éloignée des pôles de l'électro-aimant.

22. Dispositif suivant la revendication 1, caractérisé en ce que les plaques (37) ont la forme de surfaces cylindriques coaxiales, concentriques à la chambre de travail (1) et que l'écart entre les plaques adjacentes (37) diminue depuis la tubulure d'entrée (14) jusqu'à la tubulure de sortie.

23. Dispositif suivant la revendication 1, caractérisé en ce que les plaques ( 38) ont la forme de surfaces cylindriques dont la coupe transversale est une spirale et que l'écart entre les spires adjacentes de la spirale diminue depuis la tubulure d'entrée (14) jusqu'à la tubulure de sortie.

*FIG. 1*

FIG. 2

FIG. 3

FIG. 4

FIG. 6

FIG. 5

FIG. 7

FIG. 8

FIG. 9

FIG. 10

EP 0 374 251 A1

FIG. 11

FIG. 12

FIG. 13

FIG. 14

FIG. 15

FIG. 16

FIG. 17

FIG. 18

FIG. 22

FIG. 19

FIG. 20

FIG. 21

FIG. 23

FIG. 24

FIG. 25

FIG. 26

EP 0 374 251 A1

FIG. 27

FIG. 28

FIG. 29

FIG. 30

FIG. 32

FIG. 31

# INTERNATIONAL SEARCH REPORT

International Application No PCT/SU 88/00121

## I. CLASSIFICATION OF SUBJECT MATTER (If several classification symbols apply, indicate all) 6

According to International Patent Classification (IPC) or to both National Classification and IPC

IPC⁴    B 01 D 35/06

## II. FIELDS SEARCHED

### Minimum Documentation Searched 7

| Classification System | Classification Symbols |
|---|---|
| IPC⁴ | B 03 C 1/00, B 01 D 35/06 |

### Documentation Searched other than Minimum Documentation to the Extent that such Documents are Included in the Fields Searched 8

## III. DOCUMENTS CONSIDERED TO BE RELEVANT 9

| Category* | Citation of Document, 11 with indication, where appropriate, of the relevant passages 12 | Relevant to Claim No. 13 |
|---|---|---|
| A | DE, C2, 1277488 (Siemens Aktiengesellschaft) 30 April 1969 (30.04.69) | 1-23 |
| A | US, A, 4190524 ,(English Clays Lovering Pochin & CO. LTD.) 26 February 1980 (26.02.80) see the abstract, figure 1 & DE,C2, 2532305, 03.02.83 FR, B1, 2278402, 26.03.82 | 1-23 |
| A | US, A, 4363729, (Daidotokushuko Kabushiki Kaisha) 14 December 1982 (14.12.82), see the abstract, figs. 1,2 & JP, A2, 57-10311, 19.01.82 FR, B1, 2484868, 28.12.84 GB, B, 2079186, 26.09.84 DE, A1, 3123229, 25.03.82 | 1-23 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 23 December 1988 (23.12.88) | 24 February 1989 (24.02.89) |
| International Searching Authority | Signature of Authorized Officer |
| ISA/SU | |

Form PCT/ISA/210 (second sheet) (January 1985)